# EUROPÄISCHE PATENTANMELDUNG

(11) **EP 4 141 369 A1**
(43) Veröffentlichungstag der Anmeldung: **01.03.2023**
(21) Anmeldenummer: 21193337.9
(22) Anmeldetag: 26.08.2021
(51) Int. Cl.: F27B 14/06, F27B 17/02, F27D 11/02, F27D 99/00

(54) **OFEN FÜR EIN ANALYSESYSTEM, TITRATIONSSYSTEM UND TITRATIONSVERFAHREN**

(71) Anmelder: Metrohm AG, 9100 Herisau (CH)
(72) Erfinder: Ekkels, Adrian, 9200 Gossau (CH); Büchler, Alwin, 9037 Speicherschwendi (CH); Lopez, Gabriel, 9000 St. Gallen (CH)
(74) Vertreter: Hepp Wenger Ryffel AG

(57) **Zusammenfassung**

Die Erfindung betrifft einen Ofen (1, 1') für ein Analysesystem, insbesondere für ein Titrationssystem und ganz besonders für ein Karl-Fischer-Titrations-System. Der Ofen (1, 1') umfasst ein Gehäuse, ein Isolationssystem (2a, 2a', 2b, 2b', 2c, 2c') und einen Einsatz (3, 3') für ein Probengefäss. Das Isolationssystem (2a, 2a', 2b, 2b', 2c, 2c') ist zumindest teilweise um den Einsatz (3, 3') angeordnet. Mindestens ein Heizelement ist zwischen Isolationssystem (2a, 2a', 2b, 2b', 2c, 2c') und Einsatz (3, 3') und zumindest den Einsatz (3, 3') teilweise umgebend angeordnet. Die Erfindung betrifft auch ein Titrationssystem mit einem solchen Ofen (1, 1') sowie ein Titrationsverfahren.

## Beschreibung

Die Erfindung betrifft einen Ofen für ein Analysensystem, insbesondere für ein Titrationssystem, ein Titrationssystem sowie ein Titrationsverfahren.

Im Stand der Technik ist der Einsatz von Öfen insbesondere im Zusammenhang mit Titrationssystemen bekannt und ganz besonders bei der Karl-Fischer-Titration. Der Ofen ermöglicht eine thermische Probenvorbereitung, für Proben die nicht direkt titrierbar sind. Dies kann beispielsweise der Fall sein, wenn die Probe nur schlecht löslich ist, sich das Wasser nur bei hohen Temperaturen freisetzen lässt oder die Probe mit dem Karl-Fischer (KF) Reagenz reagiert. Bei der Ofenmethode werden die Proben erhitzt und das freigesetzte Wasser mittels eines trockenen Trägergases in die Titrierzelle überführt. Da nur das Wasser mit dem KF-Reagenz in Kontakt kommt, wird die Kontaminierung von Elektrode und Titrierzelle vermieden und Verschleppungs- und Memory-Effekte, die das Resultat verfälschen könnten, werden ausgeschlossen.

Gängige, derzeit auf den Markt erhältliche Öfen haben den Nachteil, dass die Wartezeit bis zum Erreichen der eingestellten Temperatur relativ lang ist. Massive Metallblöcke, die mit Heizpatronen aufgeheizt werden, reagieren aufgrund ihrer thermischen Kapazität nur sehr träge auf Temperaturveränderungen. Zudem benötigt das Aufheizen derzeit verwendeter Öfen einen hohen Energiebedarf. Auch fehlt es den Öfen an Kompaktheit.

Es ist daher eine Aufgabe der Erfindung, die Nachteile des Stands der Technik zu überwinden. Insbesondere ist es eine Aufgabe der Erfindung, einen Ofen für ein Analysensystem bereitzustellen, der eine schnelle und effiziente Probenaufheizung bei geringem Energiebedarf ermöglicht. Es ist auch eine Aufgabe der Erfindung einen kompakten Ofen bereitzustellen. Es ist weiter eine Aufgabe der Erfindung ein Titrationssystem mit einem solchen Ofen bereitzustellen sowie ein Titrationsverfahren.

Die Aufgaben werden durch die unabhängigen Ansprüche gelöst. Besondere Ausführungsformen finden sich in den abhängigen Ansprüchen.

Ein erster Aspekt der Erfindung betrifft einen Ofen für ein Analysesystem, insbesondere für ein Titrationssystem und ganz besonders für ein Karl-Fischer-Titrations-System. Der Ofen umfasst ein Gehäuse, ein Isolationssystem und einen Einsatz für ein Probengefäss. Das Isolationssystem ist zumindest teilweise um den Einsatz angeordnet. Mindestens ein Heizelement ist zwischen Isolationssystem und Einsatz und zumindest den Einsatz teilweise umgebend angeordnet.

Vorzugsweise ist das mindestens eine Heizelement durch Eigenspannung am Einsatz festgeklemmt. Auch Einkerbungen in der Wand des Einsatzes, in welches das mindestens eine Heizelement positioniert oder positionierbar ist, ist denkbar.

Ein solcher Ofen zeichnet sich dadurch aus, dass das mindestens eine Heizelement besonders dicht an die Probe bringbar ist und so ein besonders schnelles und effizientes Aufheizen der Probe ermöglicht. Dies ermöglicht zusätzlich, den Energiebedarf gegenüber bekannten Öfen zu senken.

Das Gehäuse kann von dem Isolationssystem gebildet sein oder das Isolationssystem zusätzlich in Form einer äusseren Hülle umschliessen. Das Isolationssystem kann zwei seitlichen Halbschalten und eine Bodenisolation umfassen. Es ist aber auch möglich, die seitliche Isolation einteilig zu gestalten. Das Isolationsmaterial hat vorzugsweise eine Wärmeleitfähigkeit von weniger als 0.5 W/(m * K). Beispielsweise kann das Isolationsmaterial aus dem Dämmstoff WDS Ultra (z.B. von Morgan Advanced Materials PLC), einem mineralischen mikroporöses Isolationsmaterial aus anorganischen silikatischen Substanzen, sein. Pyrogel ist ebenfalls möglich.

Das mindestens eine Heizelement kann eine Rohrpatrone sein. Die Rohrpatrone kann über ein Thermoelement verfügen. Wahlweise kann das Thermoelement ein separater oder in die Rohrpatrone integrierter Temperatursensor sein.

Die Rohrpatrone kann spiralförmig um den Einsatz angeordnet sein. Vorzugsweise wird im Falle einer spiralförmigen Rohrpatrone nur eine verwendet. Die Rohrpatrone kann mit 7 bis 8 Windungen um einen Einsatz für 6 mL und 8 mL Vials gewunden sein.

Rohrpatronen haben den Vorteil, dass sie standardmässig erhältlich sind und leicht zu handhaben sind. Es gibt Rohpatronen in variablen Ausführungen und speziell anzufertigende Rohpatronen lassen sich ebenfalls leicht realisieren. Die spiralförmige Anordnung ermöglicht eine optimale Heizung des Einsatzes und wird so möglichst nah an die Probe gebracht.

Es ist aber auch möglich, mehrere Heizpatronen in vertikaler Anordnung um den Einsatz zu positionieren und über einen gemeinsamen Anschluss zu speisen. Auch Heizmatten, Mikranit-Flächen-Heizelemente lassen sich realisieren. Das verwendete Heizelement sollte vor allem die für die Probenvorbereitung und/oder Analyse benötigte Temperatur aufbringen können. Heizmatten beispielsweise sind für hohe Temperaturen um 300 °C weniger geeignet.

Der Einsatz weist vorzugsweise einen Innendurchmesser zwischen 16 mm und 31 mm, besonders bevorzugt 22 mm bis 24 mm, auf. Typischerweise kann ein Einsatz für ein 6 mL Probengefäss einen Innendurchmesser von 22.45 mm aufweisen. Ein Einsatz für ein 8 mL Probengefäss kann beispielsweise einen Innendurchmesser von 23.25 mm aufweisen.

Der Ofen kann einen Aussendurchmesser zwischen 60 und 62 mm und vorzugsweise 61 mm aufweisen.

Als Probengefässe werden typischerweise sognannte Vials verwendet, die in der Regel mit einem Septum verschlossen sind.

Unabhängig von der Vial-Grösse bleibt der Aussendurchmesser vorteilhafterweise konstant. Die Einstellung auf entsprechend unterschiedliche Vial-Grössen kann beispielsweise über die Dicke der Wand der Isolation erfolgen.

Der Ofen kann eine Aussenhöhe zwischen 50 und 90 mm, vorzugsweise 51 und 88 mm und besonders bevorzugt 55 und 56 mm, und eine Innenhöhe des Einsatzes im Bereich von 28 bis 60 mm und bevorzugt 33 mm, aufweisen.

Der Ofen zeichnet sich durch eine besonders kompakte Bauweise aus. Der kleine Bauraum ermöglicht nahezu überall eine Platzierung und ermöglicht beispielsweise auch das Nachrüsten bestehender Systeme. Auch die Verwendung von zwei Öfen pro Analysengerät ist möglich.

Die Ofengrösse für standardmässige Vialgrössen könne beispielsweise die nachfolgenden Dimensionen des Ofens aufweisen:

| | **Ofengrösse** | | | |
|---|---|---|---|---|
| **Vial-Grösse** | **Innen-Ø** | **Innenhöhe** | **Aussen-Ø** | **Aussenhöhe** |
| 2 mL | 16.75 mm | 28.5 mm | 61 mm | 51 mm |
| 6 mL | 22.45 mm | 33.0 mm | 61 mm | 55.5 mm |
| 8 mL | 23.25 mm | 33.0 mm | 61 mm | 55.5 mm |
| 30 mL | 30.75 mm | 65.5 mm | 61 mm | 88 mm |

Der Einsatz kann aus einem wärmeleitfähigen Material, bevorzugt mit einer Wärmeleitfähigkeit höher als 10 W/(m K), gefertigt sein.

Als wärmeleitfähiges Material kann beispielsweise Messing, Silber, Aluminium (bis 250°C), rostfreier Stahl, kohlenstoffgefülltes PEEK oder auch Keramik verwendet werden. Besonders bevorzugt ist Messing. Rostfreier Stahl ist insbesondere hinsichtlich seiner chemischen Beständigkeit von Interesse. Diese Liste ist nicht abschliessend zu verstehen. Grundsätzlich sind alle Materialien mit geeigneter Wärmeleitfähigkeit denkbar.

Material mit einer hohen Wärmeleitfähigkeit ermöglicht ein besonders effizientes Aufheizen der Probe.

Der Einsatz kann einen Temperatursensor aufweisen. Vorzugsweise ist der Temperatursensor in einer Wand des Einsatzes an- oder eingebracht. Die Wand des Einsatzes kann sehr dünn sein und eine Wandstärke von 1 mm bis 3 mm, vorzugsweise 2 mm bis 2.5 mm und ganz besonders bevorzugt 2.3 mm aufweisen. Der Sensor passt so gerade in die Wand hinein und ermöglicht eine möglichst präzise Messung, die nicht durch übermässige Wandstärke verfälscht wird. Es ist aber auch möglich, wie oben bereits beschrieben, dass der Temperatursensor integraler Bestandteil der Rohrpatrone ist.

Die dünne Wandstärke des Einsatzes verringert zum einen den Materialbedarf und zum anderen kann die Temperatur im Einsatz schnell und präzise ermittelt werden.

Vorteilhafterweise kann der Ofen einen Temperaturschutzschalter aufweisen und dieser kann bevorzugt unterhalb des Einsatzes angeordnet sein. Es ist aber auch eine andere Positionierung des Schalters denkbar. Unterhalb des Einsatzes ist aufgrund der Platzverhältnisse bevorzugt.

Der Temperaturschutzschalter verhindert eine Überhitzung der Probe und/oder des Systems und gewährleistet so eine zuverlässige und langlebige Arbeitsweise.

Ein weiterer Aspekt der Erfindung betrifft ein Titrationssystem, insbesondere ein Karl-Fischer-Titrationssystem. Das Titrations-system umfasst mindestens einen Ofen wie vorhergehend beschrieben.

Das Titrationssystem ist aber nicht auf Karl-Fischer beschränkt, sondern kann jedes volumetrisch oder coulometrisch arbeitende Titrationssystem sein.

Für einen schnellen Probendurchsatz ist es auch möglich das Titrationssystem mit zwei Öfen, wie vorhergehend beschrieben, auszustatten.

Vorzugsweise weist das Titrationssystem weiter einen Probenwechsler auf und umfasst mindestens ein erstes Transfersystem zum Transferieren einer Probe von einem Probenrack zu dem mindestens einen Ofen. Das Transfersystem kann beispielsweise ein automatisches Liftsystem sein oder ein Greifarm bzw. Arm eines Probenroboters.

Mit einem Probenwechsler lassen sich mehrere Proben in einer kontinuierlichen Arbeitsweise bewerkstelligen.

Vorteilhafterweise kann das Titrationssystem mindestens ein zweites Transfersystem zum Transferieren einer Probe von dem Ofen in eine Titrierzelle aufweisen.

Beispielsweise kann das mindestens zweite Transfersystem eine Doppelhohlnadel mit einer Einlassnadel und einer Abluftnadel, eine Trägergasstrom und einen beheizten Transferschlauch umfassen. Die Probe befindet sich vorzugweise in einem Probengefäss, beispielsweise in einem mit einem Septum verschlossen Vial, im Ofen.

Ein solches Transfersystem ermöglicht es, nur gasförmige Bestandteile der Probe in die Titrierzelle zu überführen und Nebenreaktionen zwischen weiteren Bestandteilen der Probe und den Titrationsreagenzien zu verhindern.

Das System kann zumindest teilweise automatisiert, vorzugsweise voll automatisiert sein.

Ein zumindest teilweise automatisiertes System zeichnet sich durch eine kontinuierliche und somit schnelle Arbeitsweise aus. Proben können so schneller analysiert werden. Zudem lassen sich die Bedienungsabläufe besser kontrollieren, was die Reproduktion und Genauigkeit verbessert.

Ein dritter Aspekt der Erfindung betrifft ein Titrationsverfahren, vorzugsweise ein Karl-Fischer-Titrationsverfahren. Das Verfahren umfasst die Schritte:
- Bereitstellen eines Titrationssystems wie vorhergehend beschrieben,
- Bereitstellen einer Probe,
- Aufheizen der Probe mit einem Ofen wie vorhergehend beschrieben,
- Titration der Probe.

Vorzugsweise wird mit dem Titrationsverfahren der Wassergehalt einer Probe bestimmt.

Im Detail kann das Verfahren wie folgt durchgeführt werden: Die Probe oder zu untersuchende Substanz kann in einem Vial eingewogen, dicht verschlossen und so im Ofen positioniert werden. Die Probe kann im Ofen erhitzt werden, so dass beispielsweise Wasser freigesetzt werden kann. Eine Nadel, vorzugsweise eine Doppelhohlnadel durchsticht das Septum des Vials bzw. Gefässes und Trägergasstrom, z.B. Luft oder Inertgas, wird durch die erhitzte Probe geleitet. Durch die Abluftnadel strömt das mit der ausgetriebenen Feuchtigkeit beladene Trägergas über einen beheizten Transferschlauch in die Titrierzelle. In der Titrierzelle kann die Konzentration des Wassers mittels coulomtrischer oder volumetrischer Titration bestimmt werden.

Auf diese Weise kommt nur das Wasser in die Titrierzelle, so dass Nebenreaktionen von anderen in der Probe enthaltenden Substanzen mit den Titrationsreagenzien vermieden werden können. Es versteht sich, dass das Verfahren nicht auf die Bestimmung von Wasser beschränkt ist, sondern grundsätzlich für jede aufheizbaren Proben durchführbar ist.

Nachfolgend wird die Erfindung an einem Ausführungsbeispiel näher erläutert. Das Ausführungsbeispiel ist nicht limitierend aufzufassen. Es zeigen:
- Figur 1:: Einen erfindungsgemässen Ofen mit seitlicher Isolation,
- Figur 2:: der erfindungsgemässe Ofen aus Figur 1 ohne seitliche Isolation.
- Figur 3:: eine alternative Ausführungsform eines erfindungsgemässen Ofens mit zwei Kabelausgängen.
- Figur 4:: der erfindungsgemässe Ofen aus Figur 3 ohne seitliche Isolation.

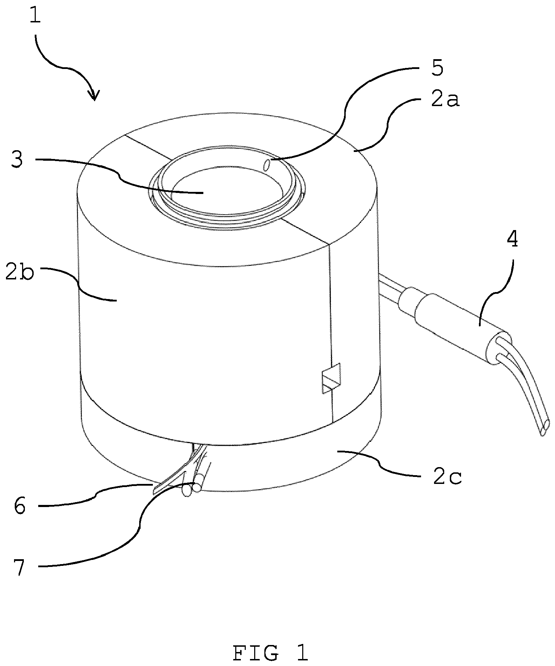

Figur 1 zeigt einen erfindungsgemässen Ofen 1 in einer perspektivischen Darstellung. Der Ofen 1 umfasst ein Isolationssystem aus zwei seitlichen Halbschalen 2a und 2b sowie einer Bodenisolation 2c. In diesem Ausführungsbeispiel bildet das Isolationssystem das Gehäuse des Ofens 1. Die Isolationshalbschalen 2a und 2b umgeben den Einsatz 3. Der Einsatz 3 verfügt über eine Serviceöffnung 5 für die Temperaturüberprüfung. Der Einsatz ist von der Rohrpatrone umgeben (nicht gezeigt). Anschlussleitungen 4 der Rohrpatrone erstrecken sich seitlich der Isolation 2a und 2b. Aus der Bodenisolation 2c erstreckt sich eine Anschlussleitung 6 für einen Temperatursensor und zwei Anschlussleitungen 7 für einen Temperaturschutzschalter.

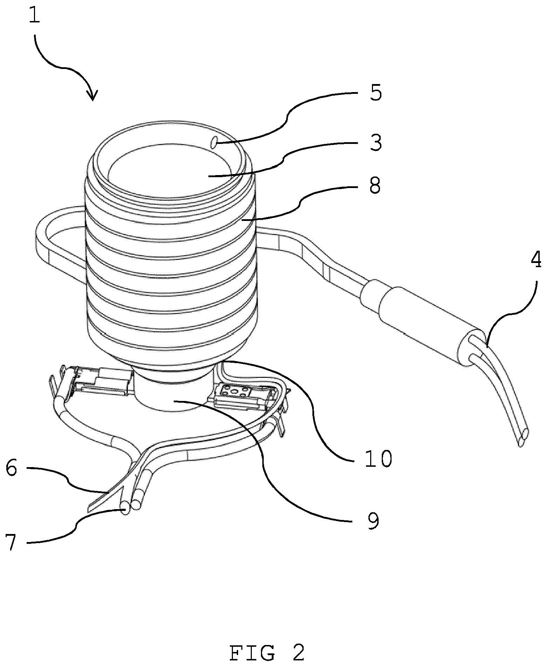

Figur 2 zeigt den erfindungsgemässen Ofen 1 aus Figur 1 ohne Isolationssystem. Neben dem Einsatz 3 und den Anschlussleitungen 4, 6 und 7 ist nun auch die Rohrpatrone 8 erkennbar. Die Rohrpatrone 8 ist spiralförmig mit 8 Windungen um den Einsatz gewickelt. Unterhalb des Einsatzes 3 befindet sich der Temperaturschutzschalter 9 seitlich unter der Rohrpatrone 8 ist der Temperatursensor 10 angebracht.

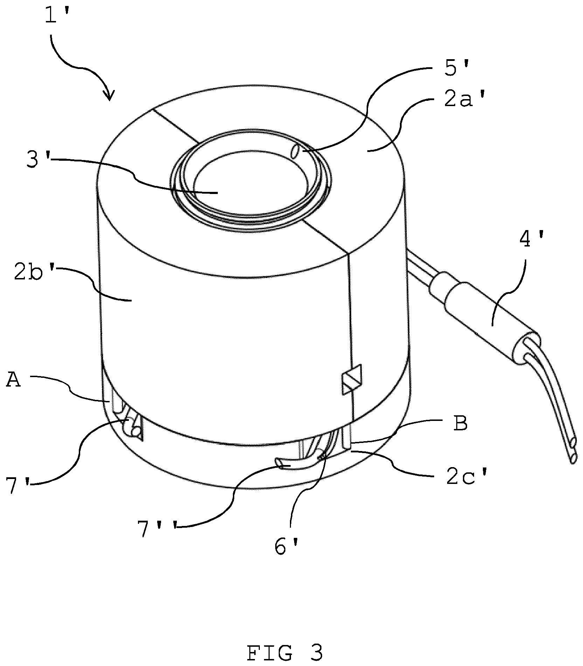

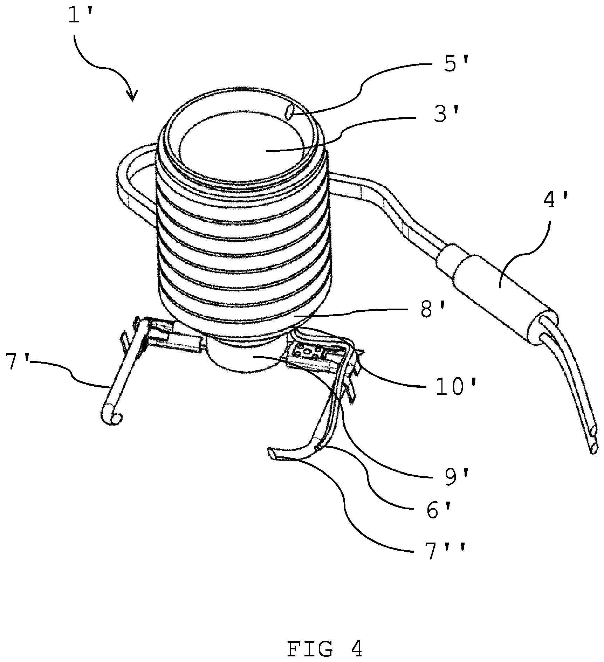

Figur 3 zeigt eine alternative Ausführungsform eines erfindungsgemässen Ofens 1'. Der Ofen 1' weist zwei Kabelausgänge A und B auf. Sowohl der Kabelausgang A als auch der Kabelausgang B weisen Anschlussleitungen 7' und 7" für den Temperaturschutzschalter (9' in Figur 4) auf. Die Anschlussleitung 6' für den Temperatursensor ist beim Kabelausgang B vorgesehen. Die übrigen Elemente sind im Wesentlichen mit denen in Figur 1 identisch.

Figur 4 zeigt den erfindungsgemässen Ofen 1' aus Figur 3 ohne Isolation. Wesentliche Elemente sind mit denen in Figur 2 identisch. Figur 4 unterscheidet sich von Figur 2 im Wesentlich darin, dass die zwei Anschlussleitungen 7' und 7" für den Temperaturschutzsensor räumlich voneinander getrennt sind.

## Patentansprüche

1. Ofen (1, 1') für ein Analysesystem, insbesondere für ein Titrationssystem und ganz besonders für ein Karl-Fischer-Titrations-System, umfassend ein Gehäuse, ein Isolationssystem (2a, 2a', 2b, 2b', 2c, 2c') und einen Einsatz (3, 3') für ein Probengefäss, wobei das Isolationssystem (2a, 2a', 2b, 2b', 2c, 2c') zumindest teilweise um den Einsatz (3, 3') angeordnet ist, **dadurch gekennzeichnet, dass** mindestens ein Heizelement zwischen dem Isolationssystem (2a, 2a', 2b, 2b', 2c, 2c') und dem Einsatz (3, 3') und zumindest den Einsatz (3, 3') teilweise umgebend angeordnet ist.

2. Ofen (1, 1') nach Anspruch 1, wobei das mindestens eine Heizelement eine Rohrpatrone (8, 8') ist.

3. Ofen (1, 1') nach Anspruch 2, wobei die Rohrpatrone (8, 8') spiralförmig um den Einsatz (3, 3') angeordnet ist.

4. Ofen (1, 1') nach einem der vorherigen Ansprüche, wobei der Einsatz (3, 3') einen Innendurchmesser zwischen 16 mm und 31 mm, bevorzugt 22 bis 24 mm, aufweist.

5. Ofen (1, 1') nach einem der vorherigen Ansprüche, wobei der Ofen (1, 1') einen Aussendurchmesser zwischen 60 und 62 mm und vorzugsweise 61 mm aufweist.

6. Ofen (1, 1') nach einem der vorherigen Ansprüche, wobei der Ofen (1, 1') eine Aussenhöhe zwischen 50 und 90 mm, vorzugsweise 51 und 88 mm und besonders bevorzugt 55 und 56 mm, aufweist und eine Innenhöhe des Einsatzes (3, 3') im Bereich von 66 bis 28 mm und bevorzugt 33 mm.

7. Ofen (1, 1') nach einem der vorherigen Ansprüche, wobei der Einsatz (3, 3') aus einem wärmeleitfähigen Material, bevorzugt mit einer Wärmeleitfähigkeit höher als 10 W/(m K), gefertigt ist.

8. Ofen (1, 1') nach einem der vorherigen Ansprüche, wobei der Einsatz (3, 3') eine Wandstärke von 1 bis 3 mm aufweist.

9. Ofen (1, 1') nach einem der vorherigen Ansprüche, wobei der Einsatz (3, 3') einen Temperatursensor (10, 10') aufweist, vorzugsweise in einer Wand des Einsatzes (3, 3').

10. Ofen (1, 1') nach einem der vorherigen Ansprüche, wobei der Ofen (1, 1') einen Temperaturschutzschalter (9, 9') aufweist und dieser bevorzugt unterhalb des Einsatzes (3, 3') angeordnet ist.

11. Titrationssystem, insbesondere ein Karl-Fischer-Titrationssystem, umfassend mindestens einen Ofen (1, 1') gemäss einem der Ansprüche 1 bis 10.

12. Titrationssystem nach Anspruch 11, wobei das System weiter einen Probenwechsler und mindestens ein erstes Transfersystem zum Transferieren einer Probe von einem Probenrack zu dem mindestens einen Ofen (1, 1') umfasst.

13. Titrationssystem nach Anspruch 11 oder 12, wobei das System mindestens ein zweites Transfersystem zum Transferieren einer Probe von dem Ofen (1, 1') in eine Titrierzelle aufweist.

14. Titrationssystem nach einem der Ansprüche 11 bis 13 wobei das System zumindest teilweise automatisiert, vorzugsweise voll automatisiert ist.

15. Titrationsverfahren, vorzugsweise ein Karl-Fischer-Titrationsverfahren, umfassend die Schritte:
- Bereitstellen eines Titrationssystems nach einem der Ansprüche 11 bis 14,
- Bereitstellen einer Probe,
- Aufheizen der Probe mit einem Ofen (1, 1') nach einem der Ansprüche 1 bis 10,
- Titration der Probe.

16. Titrationsverfahren nach Anspruch 15 zur Bestimmung eines Wassergehalts einer Probe.
